# FASCICULE DE BREVET EUROPEEN

(11) **EP 3 623 222 B1**
(45) Date de publication et mention de la délivrance du brevet: **06.05.2026**
(21) Numéro de dépôt: 19195528.5
(22) Date de dépôt: 05.09.2019
(51) Int. Cl.: B60Q 3/74, B60Q 3/76, B60Q 3/60, F21V 5/00, F21V 7/00, G03B 21/00, G02B 5/02, G02B 19/00

(54) **SYSTÈME OPTIQUE COMPACT POUR HABITACLE DE VÉHICULE AUTOMOBILE**
KOMPAKTES OPTISCHES SYSTEM FÜR FAHRZEUGSINNENRAUMBELEUCHTUNG
COMPACT OPTICAL SYSTEM FOR VEHICLE INTERIOR LIGHTING

(30) Priorité: 12.09.2018 FR 1858175
(43) Date de publication de la demande: 18.03.2020
(73) Titulaire: Valeo Vision, 93012 Bobigny Cedex (FR)
(72) Inventeur: ALBOU, Pierre, 93012 BOBIGNY Cedex (FR); LEFAUDEUX, Nicolas, 93012 BOBIGNY Cedex (FR)
(74) Mandataire: Valeo Visibility

(56) Documents cités:
- EP-A1- 0 766 115
- WO-A1-2005/116711
- CN-U- 202 209 585
- FR-A1- 3 047 946
- US-A- 3 822 930
- US-A- 4 453 806
- US-A1- 2003 026 002
- US-A1- 2018 132 330

## Description

### Domaine technique

La présente invention se situe dans le domaine de l'industrie automobile, et concerne plus particulièrement des dispositifs d'éclairage intérieur, notamment ceux pour habitacles de véhicules automobiles.

### État de la technique antérieure

Les documents US 2003 025002 Al, US 4453806 A, FR 3047946 A1 et WO 2005 116711 Al sont représentatifs de l'état de la technique antérieur.

Les habitacles connus des véhicules automobiles comprennent de nombreux dispositifs d'éclairage d'intérieur afin de réaliser une pluralité de fonctions lumineuses. À titre d'exemples non limitatifs de fonctions lumineuses connues, certains dispositifs d'éclairage d'intérieur permettent d'afficher des indications lumineuses depuis ou sur une paroi de l'habitacle ; certains dispositifs d'éclairage d'intérieur permettent de mettre en lumière des commandes manuelles du véhicule automobile ; et certains autres dispositifs d'éclairage d'intérieur sont dédiés à l'éclairage d'une partie d'un espace intérieur à l'habitacle du véhicule automobile.

Une particularité commune à tous ces dispositifs d'éclairage est qu'ils doivent satisfaire à des contraintes dimensionnelles strictes, provenant de la multiplication des dispositifs électriques - d'éclairage ou non - dans de tels habitacles de véhicules automobiles. Ainsi, si les fonctionnalités lumineuses offertes par les dispositifs d'éclairage intérieure croissent afin de satisfaire aux demandes des fabricants et usagers de véhicules automobiles, les logements disponibles dans l'habitacles s'amenuisent dans le même temps. Il en résulte une nécessaire miniaturisation afin de pouvoir continuer à offrir des fonctions lumineuses connues et/ou afin de permettre de réaliser de nouvelles fonctions lumineuses pour des habitacles de véhicules automobiles.

Plus particulièrement, on connait l'utilisation de sources lumineuses dites pixellisées et à forte luminance pour une intégration dans de tels dispositifs d'éclairage intérieur : ces sources lumineuses sont de petites dimensions et permettent de satisfaire plus facilement à une partie des contraintes dimensionnelles précitées. En outre, elles présentent un faible coût d'acquisition et permettent ainsi de réduire les coûts de fabrication de ces dispositifs d'éclairage intérieur. Toutefois, la conjugaison de leurs faibles dimensions et de leur forte luminance rend de telles sources lumineuses pixellisées incompatibles à un usage dans l'habitacle d'un véhicule automobile, car elles présentent un risque potentiel pour un œil humain et elles nuisent au confort d'un usager du véhicule automobile.

La présente invention a pour objet de répondre au moins en grande partie aux problèmes précédents et de conduire en outre à d'autres avantages en proposant un nouveau système optique pour habitacle de véhicule automobile.

Un autre but de la présente invention est de réduire l'encombrement d'un tel système optique par rapport à ceux mis en œuvre dans les dispositifs d'éclairage intérieures connus.

Un autre but de la présente invention est de réduire la luminance d'une source lumineuse pixellisée tout en conservant sa pixellisation.

Un autre but de l'invention est de limiter les coûts de fabrication d'un tel système optique et d'un dispositif d'éclairage comprenant un tel système optique.

### Exposé de l'invention

Selon l'invention, on atteint au moins l'un des objectifs précités avec un système optique pour habitacle de véhicule automobile tel que défini dans la revendication 1, le système optique comprenant (i) un diffuseur configuré pour diffuser des rayons lumineux incidents d'un faisceau lumineux généré par une source lumineuse, et (ii) un ensemble optique configuré pour projeter une image réelle de la source lumineuse sur le diffuseur, une première étendue géométrique du faisceau lumineux mesurée au niveau de la source lumineuse étant inférieure à une deuxième étendue géométrique du faisceau lumineux mesurée au niveau d'une face de sortie de l'ensemble optique.

Ainsi, l'utilisation astucieuse du diffuseur permet au système optique conforme à l'invention de réduire une luminance de la source lumineuse destinée à collaborer avec lui. En outre, le système optique conforme à l'invention est configuré pour conserver la pixellisation de la source lumineuse. En d'autres termes, une forme et/ou une géométrique de la source lumineuse destinée à collaborer avec l'ensemble optique est sensiblement conservée en sortie de l'ensemble optique et/ou du système optique. Consécutivement, les rayons lumineux qui pénètrent dans le système optique conforme à l'invention en ressortent avec une luminance réduite et en gardant une répartition spatiale sensiblement conforme à celle qu'ils avaient en entrée. En d'autres termes, le système optique est configuré pour réaliser une transformation homothétique de la source lumineuse avec laquelle il est destiné à collaborer - et préférentiellement une transformation homothétique du type d'un agrandissement. L'utilisation du diffuseur permet en outre de modifier un angle d'ouverture des rayons lumineux traversant le système optique.

Le diffuseur du système optique conforme au premier aspect de l'invention est configuré pour diffuser - de préférence sans absorption - tout rayon lumineux - dits rayons lumineux incidents - arrivant à sa surface. Les rayons lumineux diffusés par le diffuseur du système optique conforme à l'invention sont émis dans une pluralité de directions à partir dudit diffuseur, préférentiellement sans direction de propagation privilégiée. En d'autres termes, une luminance du diffuseur est isotrope, quelle que soit l'orientation des rayons lumineux incidents.

L'ensemble optique conforme à l'invention est destiné à collaborer avec la source lumineuse afin de projeter les rayons lumineux générés par elle vers le diffuseur. À cet effet, le diffuseur est situé au niveau d'un côté opposé à une position de la source de lumière par rapport à l'ensemble optique lorsque le système optique conforme au premier aspect de l'invention est utilisé avec ladite source lumineuse.

Conformément à l'invention, le système optique permet de d'augmenter l'étendue géométrique du faisceau lumineux traversant ledit système optique, entre (i) une face d'entrée située du côté de la source lumineuse destinée à collaborer avec le système optique et (ii) la face de sortie du système optique.

L'étendue géométrique d'un faisceau lumineux caractérise l'importance de l'ensemble des rayons lumineux émis par une source lumineuse et limité à la partie d'entre eux qui atteint un récepteur considéré. L'étendue géométrique du faisceau lumineux correspond à une grandeur géométrique (en m².sr) caractérisant une taille et une forme de la partie des rayons lumineux générés par la source lumineuse et qui atteignent le récepteur. En d'autres termes, l'étendue géométrique du faisceau lumineux caractérise la manière dont le faisceau de rayons lumineux est réparti sur une surface émettrice et les rayons lumineux angulairement dans ledit faisceau lumineux. À titre d'exemple approximatif, dans le cas d'une source lumineuse émettant dans une demi-sphère telle qu'une diode électroluminescente, l'étendue géométrique du faisceau lumineux est obtenue par le produit du cône de rayonnement de la source lumineuse considérée - c'est-à-dire le plus petit cône à l'intérieur duquel sont compris tous les rayons lumineux générés par ladite source lumineuse - par la surface d'émission. D'autres méthodes de calcul sont applicables pour d'autres types de sources lumineuses et sont bien connues de l'homme du métier.

Ainsi, grâce au système optique conforme à l'invention, le cône de rayonnement pris en sortie dudit système optique est supérieur au cône de rayonnement de la source lumineuse située en entrée dudit système optique.

Selon un avantage principal de l'invention, un tel système optique est compact et permet ainsi de réduire l'encombrement d'un tel système optique par rapport à ceux mis en œuvre dans les dispositifs d'éclairage intérieures connus. En outre, la réalisation d'un tel système optique permet de limiter les coûts de fabrication.

Selon l'invention, l'ensemble optique comprend (i) une première partie située optiquement entre la source lumineuse et le diffuseur, la première partie étant apte à anamorphoser la source lumineuse, et (ii) une deuxième partie située optiquement entre le diffuseur et la face de sortie de l'ensemble optique, la deuxième partie étant une optique de projection des rayons lumineux diffusés par le diffuseur. L'adverbe « optiquement » s'entend ici selon le sens de déplacement des rayons lumineux dans le système optique lors de son utilisation normale. La première partie de l'ensemble optique permet notamment de créer une image réelle de la source lumineuse avec laquelle le système optique est destiné à collaborer supérieure à sa dimension réelle ; et le cône de rayonnement d'une telle image réelle de la source lumineuse est inférieur à celui de ladite source lumineuse prise en tant que tel. L'optique de projection formant la deuxième partie de l'ensemble optique est configurée pour créer une deuxième image réelle de l'image réelle - dite première image réelle - de la source lumineuse sur le diffuseur. Éventuellement, l'optique de projection crée la deuxième image réelle par l'intermédiaire d'une anamorphose. La deuxième image réelle créée par l'optique de projection est située à distance - finie ou infinie - très grande devant des dimensions du système optique conforme au premier aspect de l'invention. À titre d'exemple non limitatif, la distance

à laquelle est créée la deuxième image réelle est située au moins 30 fois, et préférentiellement 100 fois, plus loin que les dimensions du système optique.

Le système optique conforme à l'invention peut comprendre avantageusement un des perfectionnements ci-dessous, les caractéristiques techniques formant ces perfectionnements pouvant être prises seules ou en combinaison :
- la première partie de l'ensemble optique propose avantageusement un grandissement supérieur à 1, et préférentiellement supérieur à 2 ;
- l'optique de projection formant la deuxième partie de l'ensemble optique comprend un ou plusieurs réflecteurs et/ou une ou plusieurs lentilles et/ou un ou plusieurs guides de lumière ;
- la première partie de l'ensemble optique est venue de matière avec le diffuseur, et/ou la deuxième partie de l'ensemble optique est venue de matière avec le diffuseur. Par « venu de matière », on entend que les deux pièces en question sont issues d'un même procédé de fabrication, et qu'elles ne peuvent être séparées l'une de l'autre sans endommager ou casser l'une et/ou l'autre de ces pièces. Ainsi, selon un premier mode de réalisation, le premier élément est venu de matière avec le diffuseur, ledit diffuseur étant formé sur l'une des faces dudit premier élément. Selon un deuxième mode de réalisation, l'optique de projection est venue de matière avec le diffuseur, ledit diffuseur étant formé sur l'une des faces de ladite optique de projection. Selon un troisième mode de réalisation, le premier élément et le diffuseur et l'optique de projection sont tous venus de matière, ensemble ;
- la première partie de l'ensemble optique comprend un premier réflecteur associé à un deuxième réflecteur, le deuxième réflecteur étant configuré pour réfléchir des rayons lumineux réfléchis par le premier réflecteur. Le premier et/ou le deuxième réflecteur sont obtenus préférentiellement par aluminure d'une partie du premier élément ;
- le premier réflecteur est configuré pour concentrer les rayons lumineux sur le deuxième réflecteur ;

Selon l'invention, premier axe optique associé à la première partie de l'ensemble optique est sécant à un deuxième axe optique associé à la deuxième partie dudit ensemble optique. Cette configuration avantageuse permet ainsi de proposer un forme « coudée » du système optique conforme au premier aspect de l'invention, réduisant ainsi son encombrement dimensionnel. Plus particulièrement, un angle formé par le premier axe optique et le deuxième axe optique est compris entre 70° et 110°. Dans le contexte de l'invention, l'axe optique est défini par un rayon lumineux barycentrique émis ou mis en forme par l'ensemble optique correspondant ou par la source lumineuse correspondante ;

Les perfectionnements suivant peuvent également être compris avantageusement dans le système optique :
- le diffuseur est configuré pour diffracter les rayons lumineux incidents. En d'autres termes, le diffuseur du système optique est configuré pour dévier les rayons lumineux incidents de manière cohérente, pouvant aboutir à des interférences lumineuses. À cet effet, le diffuseur peut comprendre un réseau unidimensionnel ou bidimensionnel de motifs qui s'étendent en saillie ou en creux par rapport à une surface d'incidence du diffuseur. À titre d'exemple non limitatif, un tel diffuseur diffractif peut prendre la forme d'un diffuseur holographique ;
- le diffuseur est configuré pour être au moins en partie réflectif. En d'autres termes, el diffuseur est configuré pour pouvoir réfléchir au moins une partie des rayons lumineux incidents ;
- le diffuseur comprend une surface de diffusion rugueuse. Par « rugueuse », on comprend que la surface de diffusion comprend des aspérités à sa surface de diffusion qui conduisent à diffuser les rayons lumineux incidents. Le contrôle des dimensions des aspérités et/ou d'une densité desdites aspérités conduit à définir le caractère diffusif du diffuseur ;
- la surface de diffusion rugueuse du diffuseur est grainée. À titre d'exemple non limitatif, une telle surface de diffusion du diffuseur peut être obtenue par sablage ;
- le diffuseur comprend une surface courbée ;
- l'ensemble optique est avantageusement réalisé dans une matière plastique et/ou en verre. On utilisera préférentiellement du polycarbonate (PC), du carbonate de polypropylène (PPC) ou du polyméthacrylate de méthyle (PMMA).

Selon un perfectionnement de l'invention, il est proposé un dispositif d'éclairage intérieur pour plafonnier de véhicule automobile, le dispositif d'éclairage intérieur comprenant :
- un système optique tel que défini ci-dessus ;
- une source lumineuse associée au système optique et configurée pour générer des rayons lumineux que l'ensemble optique du système optique projette sur le diffuseur dudit système optique, les rayons lumineux traversant la face de sortie dudit système optique étant destinés à éclairer une partie d'un habitacle du véhicule automobile.

Ainsi, le dispositif d'éclairage conforme à l'invention permet de proposer un éclairage intérieur d'habitacle de véhicule automobile qui réduit la luminance des sources lumineuses utilisées et qui rendent ainsi ces dernières compatibles avec un tel usage pour un habitacle de véhicule automobile.

Le dispositif d' éclairage intérieur conforme à l'invention peut comprendre avantageusement au moins un des perfectionnements ci-dessous, les caractéristiques techniques formant ces perfectionnements pouvant être prises seules ou en combinaison :
- la source lumineuse est pixellisée et comprend une pluralité de diodes électroluminescentes organisées selon un réseau. De préférence, le réseau de diodes électroluminescentes est unidimensionnel ou, préférentiellement, bidimensionnel. Cette configuration avantageuse permet ainsi de rendre compatible les sources lumineuses pixellisées avec un usage pour un habitacle de véhicule automobile, sans modifier la manière dont elles sont pilotées électriquement, et notamment l'intensité du courant de contrôle de telles sources lumineuses pixellisées ;
- les diodes électroluminescentes formant la source lumineuse pixellisée sont avantageusement pilotées par un signal électrique dont un courant électrique présente une forte intensité, par exemple supérieure à 1 Ampère.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue schématique d'un premier mode de réalisation d'un système optique non conforme à l'invention et mis en œuvre dans un dispositif d'éclairage intérieur ;
- la FIGURE 2 illustre une vue schématique d'un deuxième mode de réalisation d'un système optique conforme à l'invention et mis en œuvre dans un dispositif d'éclairage intérieur ;
- la FIGURE 3 illustre un troisième mode de réalisation du système optique conforme au premier aspect de non conforme à l'invention ;
- la FIGURE 4 illustre une vue de détail éclatée d'une première partie de l'ensemble optique mis en œuvre dans le système optique illustré sur la FIGURE 3.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment, à à condition de rester dans le cadre des revendications, imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

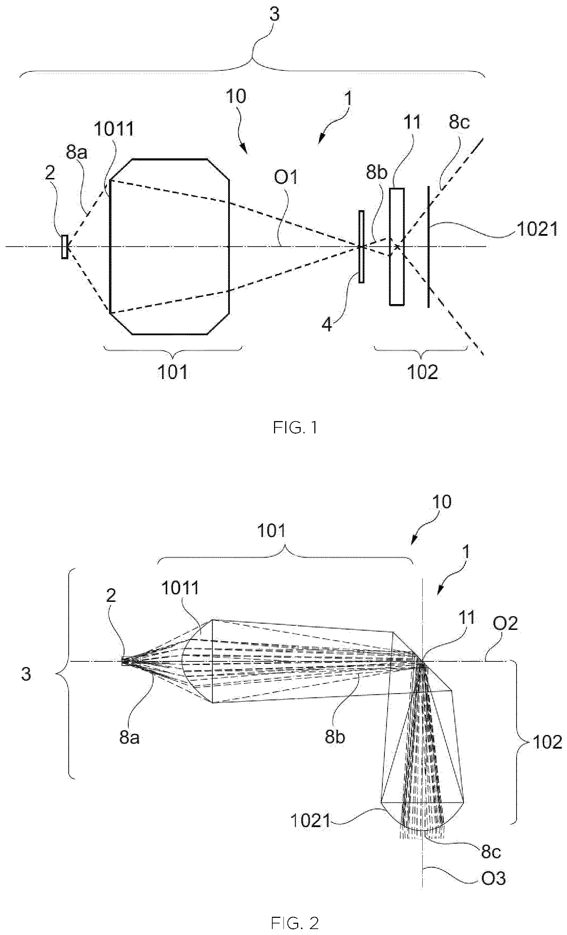

En références aux FIGURES 1 à 3, un système optique 1 est décrit dans ses caractéristiques communes à chaque mode de réalisation illustré.

Les particularités propres à chaque mode de réalisation seront décrites ultérieurement plus en détail en référence à chacune des FIGURES 1 à 4.

Sur les FIGURES décrites ci-après, les tracés de rayons lumineux à l'intérieur du système optique 1 sont donnés à titre uniquement indicatifs, afin de faciliter la compréhension du fonctionnement de l'invention.

Un tel système optique 1 comprend (i) un diffuseur 11 configuré pour diffuser des rayons lumineux incidents 8b arrivant sur ledit diffuseur 11, et (ii) un ensemble optique 10 configuré pour projeter sur le diffuseur 11 une image réelle 4 - représentée schématiquement sur la FIGURE 1 - d'une source lumineuse 2 destinée à être utilisée avec le système optique 1. Conformément à l'invention, une première étendue géométrique du faisceau lumineux mesurée au niveau de la source lumineuse 2 est inférieure à une deuxième étendue géométrique du faisceau lumineux mesurée au niveau d'une face de sortie 1021 de l'ensemble optique 10. En d'autres termes, le système optique 1 conforme au premier aspect de l'invention est configuré pour réduire une étendue géométrique du faisceau lumineux mesurée au niveau des rayons lumineux 8a générés par la source lumineuse 2 destinée à collaborer avec lui, l'étendue géométrique du faisceau lumineux ainsi réduite étant mesurée au niveau ou au-delà de la face de sortie 1021 de l'ensemble optique 10, et formée par les rayons lumineux 8c sortant dudit système optique 1.

Un tel système optique 1 destiné à être mis en œuvre dans un dispositif d'éclairage intérieur 3 et utilisé dans un véhicule automobile pour éclairer une partie d'un habitacle. Un tel dispositif d'éclairage intérieur 3 est conforme au deuxième aspect de l'invention et comprend (i) au moins un système optique 1 conforme au premier aspect de l'invention et (ii) une source lumineuse 2 associée au système optique 1 et configurée pour générer des rayons lumineux 8a que l'ensemble optique 10 du système optique 1 projette sur le diffuseur 11 dudit système optique 1, les rayons lumineux 8c traversant la face de sortie 1021 dudit système optique 1 étant destinés à éclairer une partie d'un habitacle du véhicule automobile.

De manière avantageuse, la source lumineuse 2 est couplée optiquement au système optique 1, de manière à ce qu'une majorité - et préférentiellement la totalité - des rayons lumineux 8a générés par la source lumineuse 2 traversent une face d'entrée 1011 du système optique 1. À cet effet, la source lumineuse 3 est avantageusement solidarisée au système optique 1, soit par une fixation directe audit système optique 1, soit par l'intermédiaire d'un support rigide auquel le système optique 1 et la source lumineuse 3 sont fixés.

La source lumineuse 2 est avantageusement une source lumineuse pixellisée comprenant une pluralité de diodes électroluminescentes organisées suivant un réseau bidimensionnel. Ainsi, le système optique 1 est particulièrement destiné à être utilisé en combinaison avec une source lumineuse surfacique dans laquelle plusieurs diodes électroluminescentes forment des rayons lumineux 8a qui sont mis en forme par le système optique 1. Comme il sera détaillé ultérieurement en référence aux FIGURES 1 à 4, le système optique 1 est configuré pour réduire la luminance de la source lumineuse 2 tout en conservant la distribution spatiale des différentes diodes électroluminescentes formant la source lumineuse pixellisée.

Plus particulièrement, l'ensemble optique 10 du système optique 1 comprend (i) une première partie 101 située optiquement entre la source lumineuse 2 et le diffuseur 11, et (ii) une deuxième partie 102 située optiquement entre le diffuseur 11 et la face de sortie 1021 de l'ensemble optique 10. La première partie 101 et la deuxième partie 102 sont alternativement venues de matière ou rapportée l'une sur l'autre par l'intermédiaire de moyens de fixation, tel que par exemple par collage ou fixées sur un support commun non représenté sur les FIGURES.

La première partie 101 de l'ensemble optique 10 est apte à anamorphoser la source lumineuse 2 avec laquelle le système optique est destiné à collaborer, afin de faire diminuer la luminance de ladite source lumineuse 2. Le grandissement de la première partie 1011 de l'ensemble optique 10 est avantageusement supérieur ou égal à 2, et préférentiellement égal à 2,5 afin de diminuer suffisamment la luminance d'une source lumineuse pixellisée et de la rendre compatible avec un usage d'éclairage intérieur d'habitacle de véhicule automobile. En outre, la première partie 101 de l'ensemble optique 10 est configurée pour projeter une image réelle de la source lumineuse 2 sur ou à proximité du diffuseur 11. Par « à proximité » du diffuseur, on comprend que l'image réelle est formée à une distance inférieure à quelques millimètres du diffuseur 11, de préférence en amont du diffuseur 11 dans le sens de propagation des rayons lumineux 8a, 8b, 8c.

La deuxième partie 102 de l'ensemble optique 10 prend la forme d'une optique de projection des rayons lumineux diffusés par le diffuseur 11. En d'autres termes, la deuxième partie 102 de l'ensemble optique 10 est configurée pour créer une deuxième image réelle de la première image réelle de la source lumineuse 2 créée au niveau du diffuseur 11 par la première partie 101 de l'ensemble optique 10.

La première partie 101 et/ou la deuxième partie 102 de l'ensemble optique 10 sont configurées individuellement ou collectivement pour conserver une pixellisation de la source lumineuse 2 avec laquelle le système optique 1 est configuré pour collaborer lorsqu'il est mis en œuvre dans un dispositif d'éclairage intérieur 3. En d'autres termes, lorsque la source lumineuse 2 est composée d'une pluralité de diodes électroluminescentes, alors l'ensemble optique 10 est configuré pour conserver une dissociation spatiale des rayons lumineux émis par chaque diode électroluminescente de ladite source lumineuse 2.

Le diffuseur 11 de l'ensemble optique 10 permet de faire diffuser les rayons lumineux incidents 8b dans une pluralité de directions, de manière isotrope ou anisotrope, selon les effets recherchés. Comme illustré dans les FIGURES 1 à 3, le diffuseur 11 est avantageusement situé dans une position optiquement intermédiaire entre la face d'entrée 1011 et la face de sortie 1021 de l'ensemble optique 10 du système optique 1.

Le diffuseur 11 et l'ensemble optique 10 sont avantageusement réalisés dans des matériaux optiquement transparents, notamment aux longueurs d'ondes des rayons lumineux générés par la source lumineuse 2 avec laquelle le système optique 1 est susceptible de collaborer. À titre d'exemple non limitatif, le diffuseur 11 et/ou l'ensemble optique 10 sont avantageusement réalisés en verre ou dans une matière plastique telle que par exemple du polycarbonate (PC), du carbonate de polypropylène (PPC) ou du polyméthacrylate de méthyle (PMMA).

Le système optique 10 peut prendre plusieurs configurations afin de répondre aux contraintes d'encombrement dimensionnel imposés par les différents habitacles de véhicule automobile, et notamment par les dimensions des plafonniers dans lesquels le système optique est préférentiellement destiné à être intégré. À titre d'exemples non limitatifs, les FIGURES 1 à 4 vont maintenant être décrites plus en détail au travers de leurs particularités.

La FIGURE 1 illustre une version schématique d'un premier mode de réalisation du système optique 1 mis en œuvre dans un dispositif d'éclairage intérieur 3, et dans lequel le système optique 1 s'étend suivant un unique axe optique O1.

La première partie 101 de l'ensemble optique 10 est située à distance de la source lumineuse 2 et possède un large angle d'admission, de manière à ce que la majorité - et préférentiellement la totalité - des rayons lumineux 8a générés par la source lumineuse 2 pénètrent dans le système optique 10 au travers de la face d'entrée 1011 de la première partie 101 de l'ensemble optique 10. La première partie 101 est formée par une ou plusieurs lentilles et/ou par une ou plusieurs surfaces réfléchissantes afin de former l'image réelle 4 de la source lumineuse 2 dans une position optiquement intermédiaire entre la première partie 101 et le diffuseur 11, le long de l'unique l'axe optique O1.

L'ensemble des rayons lumineux incidents 8b qui atteignent le diffuseur 11 au-delà de l'image réelle 4 de la source lumineuse 2 forment ensemble un cône dont un angle d'ouverture est inférieur à celui d'un cône formé par l'ensemble des rayons lumineux 8a générés par la source lumineuse 2.

Le diffuseur 11 du système optique 10 illustré sur la FIGURE 1 est transparent de manière à le rendre traversant : les rayons lumineux incidents 8b atteignant le diffuseur 11 le traversent axialement le long de l'axe optique O1 et sont diffusés dans une pluralité de directions autour dudit axe optique O1, au niveau d'une face située du côté de la face de sortie 1021 de l'ensemble optique.

Le diffuseur optique 11 illustré sur la FIGURE 1 est avantageusement plan. En outre il présente au moins une surface rugueuse, par exemple grainée, afin de diffuser les rayons lumineux incidents 8b.

Dans ce premier mode de réalisation, le diffuseur 11 et au moins une partie 101, 102 de l'ensemble optique 10 sont fixés solidairement sur un support - non représenté sur la FIGURE 1. Alternativement, ils peuvent aussi être tous ou en partie venus de matière afin de ne former qu'une seule pièce optique et de réduire l'encombrement dimensionnel du système optique tout en facilitant son intégration dans un dispositif d'éclairage intérieur 3.

La FIGURE 2 illustre une version schématique d'un deuxième mode de réalisation du système optique 1 mis en œuvre dans un dispositif d'éclairage intérieur 3, et dans lequel le système optique 1 présente une configuration coudée.

La première partie 101 de l'ensemble optique 10 est située à distance de la source lumineuse 2 et possède un large angle d'admission, de manière à ce que la majorité - et préférentiellement la totalité - des rayons lumineux 8a générés par la source lumineuse 2 pénètrent dans le système optique 10 au travers de la face d'entrée 1011 de la première partie 101 de l'ensemble optique 10. La première partie 101 est formée par une ou plusieurs lentilles et/ou par une ou plusieurs surfaces réfléchissantes afin de former l'image réelle de la source lumineuse 2 au niveau du diffuseur 11, le long d'un premier axe optique O2 qui s'étend suivant une première direction.

Le diffuseur 11 du système optique 10 illustré sur la FIGURE 2 est réfléchissant et il est orienté par rapport au premier axe optique O2 de manière à former un angle non nul et préférentiellement compris entre 20° et 70°. Afin de le rendre réfléchissant, le diffuseur 11 comprend au moins une surface réfléchissante, par exemple obtenue par une aluminure. Le diffuseur 11 est ainsi configuré pour réfléchir au moins la moitié des rayons lumineux 8b incidents, et de manière à les renvoyer en direction d'une pupille de l'optique de projection formant la deuxième partie 102 de l'ensemble optique 10. En outre, le diffuseur 11 comprend au moins une surface rugueuse, par exemple grainée, afin de diffuser les rayons lumineux incidents 8b. La surface réfléchissante est avantageusement distincte de la surface rugueuse. Dans l'exemple schématique illustré sur la FIGURE 2, la surface rugueuse est celle que les rayons lumineux 8b atteignent lorsqu'ils sont mis en forme par la première partie 101 de l'ensemble optique 10 ; et la surface réfléchissante est celle qui est située à l'opposé de ladite surface rugueuse par rapport à un plan médian du diffuseur 11. Le diffuseur optique **11** illustré sur la FIGURE 2 est avantageusement plan.

La deuxième partie 102 de l'ensemble optique 10 du système optique 1 illustré sur la FIGURE 2 est située en aval du diffuseur 11 selon le sens de propagation des rayons lumineux 2 dans le système optique 1. La deuxième partie 102 est orientée suivant un deuxième axe optique O2 qui forme un angle non nul avec le premier axe optique O1, préférentiellement compris entre 20° et 160° selon les applications recherchées, et préférentiellement encore égal à 90°.

Dans ce deuxième mode de réalisation, le diffuseur 11 et au moins une partie 101, 102 de l'ensemble optique 10 sont fixés solidairement sur un support - non représenté sur la FIGURE 2. Alternativement, ils peuvent aussi être tous ou en partie venus de matière afin de ne former qu'une seule pièce optique et de réduire l'encombrement dimensionnel du système optique tout en facilitant son intégration dans un dispositif d'éclairage intérieur 3.

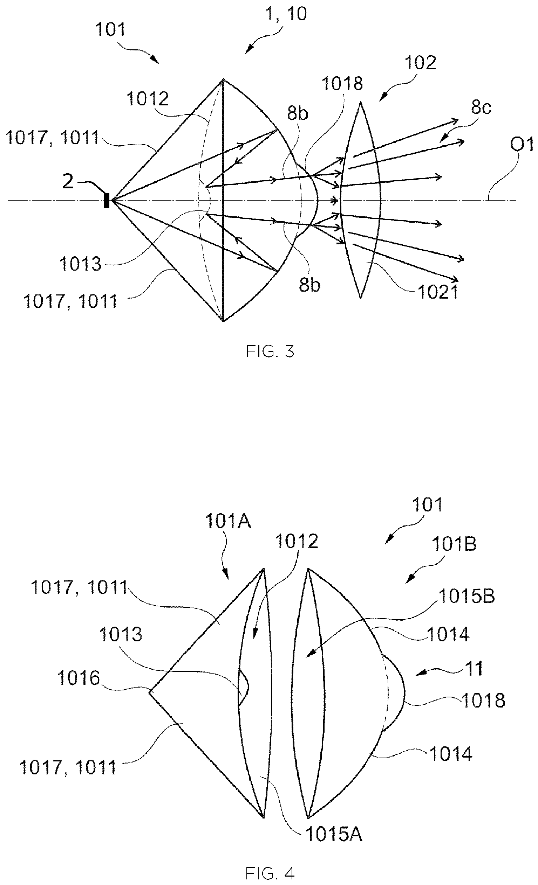

La FIGURE 3 illustre une version schématique d'un troisième mode de réalisation du système optique 1 conforme au premier aspect de l'invention et dans lequel le système optique 1 s'étend suivant un unique axe optique O1. Afin de mieux comprendre ce troisième mode de réalisation, la FIGURE 4 illustre une vue schématique éclatée de la première partie 101 de l'ensemble optique.

La première partie 101 de l'ensemble optique 10 est formée par une première pièce optique 101A et une deuxième pièce optique 101B qui sont avantageusement rapportées l'une contre l'autre au niveau de leurs faces de contact 1015A, 1015B. Elles sont préférentiellement collées l'une contre l'autre au niveau de leurs faces de contact 1015A, 1015B.

La première pièce optique 101A a une forme générale conique, la source lumineuse 2 étant destinée à être mise à proximité ou contre un sommet 1016 de ladite surface conique. La première pièce optique 101A est configurée pour collecter les rayons lumineux générés par la source lumineuse 2. La surface conique est ainsi délimitée par des parois extérieures 1017 linéaire qui s'étendent autour de l'axe optique O1 entre le sommet 1016 et la surface de contact 1015A. Les parois extérieures 1017 de la première pièce optique 101A sont avantageusement transparentes afin de laisser passer les rayons lumineux générés par la source lumineuse. Les parois extérieures 1017 forment ainsi la face d'entrée 1011 de l'ensemble optique 10 du système optique conforme à ce mode de réalisation.

Les rayons lumineux qui traversent les parois extérieures 1017 de la surface conique parviennent jusqu'à une surface concave 1012 située entre lesdites parois extérieures 1017 et autour de l'axe optique O1. Collectivement, les parois extérieures 1017 et la surface concave 1012 forment une lentille de mise en forme des rayons lumineux générés par la source lumineuse : les parois extérieures 1017 et la surface concave 1012 de la première pièce optique 101A offrent une vergence positive.

La surface concave 1012 est transparente de manière à pouvoir être traversée par les rayons lumineux.

Les rayons lumineux traversant la première pièce optique 101A sont projetés hors de la première pièce optique 101A en direction de la deuxième pièce optique 101B. Ces rayons lumineux - se propageant à l'intérieur de la première pièce optique 101A - atteignent ensuite la deuxième pièce optique 101B dont ils traversent la surface de contact 1015B.

La deuxième pièce optique 101B a une forme concave : des parois extérieures 1014 de ladite deuxième pièce optique 101B étant non linéaires, et préférentiellement paraboliques. Les parois extérieures 1014 de la deuxième pièce optique sont rendus réfléchissants, par exemple par l'intermédiaire d'un dépôt d'aluminium à leur surface. Consécutivement, les parois extérieures 1014 de la deuxième pièce optique 101B forment un deuxième réflecteur concave configuré pour réfléchir les rayons lumineux provenant de la première pièce optique 101A en direction de ladite première pièce optique 101A et de manière convergente vers l'axe optique O1.

Ces rayons lumineux atteignent la première pièce optique 101A au niveau d'une région proximale de l'axe optique O1 et formant un premier réflecteur convexe 1013. On notera que le premier réflecteur convexe 1013 est venu de matière avec la surface conique : il s'étend en saillie de la surface concave 1012 située à l'intérieur de la surface conique de la première pièce optique 101A, symétriquement autour de l'axe optique O1. Le premier réflecteur convexe 1013 est obtenu par un dépôt métallique à sa surface, par exemple de l'aluminium.

Les rayons lumineux atteignant le premier réflecteur convexe 1013 sont à nouveau renvoyés en direction de la deuxième pièce optique 101B, au niveau d'une région proximale de l'axe optique O1, relativement aux parois extérieures 1014 de la deuxième pièce optique 101B. Ainsi, le premier réflecteur convexe 1013 de la première pièce optique 101A contribue à former une image réelle de la source lumineuse susceptible d'être associé au présent ensemble optique 10.

L'image réelle ainsi formée est formée au niveau de la région proximale de l'axe optique O1 de la deuxième pièce optique 101B. À cet effet, la deuxième pièce optique comprend une surface bombée transparente 1018 qui s'étend en saillie des parois extérieures 1014 de la deuxième pièce optique 101B. Plus particulièrement, la surface bombée transparente 1018 prend la forme d'un dôme qui s'étend symétriquement autour de l'axe optique 101B et en saillie des parois extérieures 1014.

La surface bombée transparente 1018 forme ici le diffuseur 11 du système optique 1 conforme au premier aspect de l'invention. À cet effet, la surface bombée transparente 1018 est avantageusement rugueuse de manière à pouvoir diffuser les rayons lumineux incidents 8b dans une pluralité de directions autour de l'axe optique O1.

Ainsi, la première pièce optique 101A et la deuxième pièce optique 101B permettent ensemble de créer, à proximité de la surface bombée transparente 1018, une image réelle de la source lumineuse destinée à collaborer avec le système optique 1. L'image réelle ainsi formée est agrandie par rapport à ses dimensions réelles, de manière à réduire sa luminance.

Par suite, comme visible sur la FIGURE 4, la première partie 101 de l'ensemble optique 10 est associée à un la deuxième partie 102 afin de projeter l'image réelle de la source lumineuse au-delà de la face de sortie 1021 du système optique 1.

Le système optique illustré dans ce troisième mode de réalisation est particulièrement compact et économique à fabriquer, car il résulte de l'assemblage des deux pièces optiques 101A, 101B et de leur combinaison avec la deuxième partie 102 de l'ensemble optique 10.

En synthèse, l'invention concerne notamment un système optique 1 et un dispositif d'éclairage intérieur 3 pour véhicule automobile et comprenant une source lumineuse 2 accouplée à un tel système optique 1. Le système optique 1 comprend une première partie 101 d'un ensemble optique 10 qui permet de projeter une image réelle 4 de la source lumineuse 2 à proximité d'un diffuseur 11 du système optique 1. L'ensemble optique 10 du système optique 1 comprend aussi une deuxième partie 102 qui joue le rôle d'une optique de projection afin de projeter hors dudit système optique 1 une image réelle de l'image réelle de la source lumineuse 2 formée à proximité du diffuseur 11. Le système optique 1 selon l'invention permet de réduire une luminance de la source lumineuse 2 du dispositif d'éclairage intérieur 3 tout en conservant sa pixellisation, permettant ainsi d'utiliser dans des habitacles de véhicule automobile des sources lumineuse à base de diodes électroluminescentes et pilotées par un courant électrique de fort ampérage sans risque pour les occupants desdits habitacles.

Bien sûr, l'invention n'est pas limitée aux exemples qui viennent d'être décrits et de nombreux aménagements peuvent être apportés à ces exemples sans sortir du cadre des revendications.

Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres.

## Revendications

1. Système optique (1) pour l'éclairage intérieur d'un habitacle de véhicule automobile, le système optique (1) comprenant :
- un diffuseur (11) configuré pour diffuser des rayons lumineux incidents (8b) d'un faisceau lumineux généré par une source lumineuse (2) ;
- un élément optique (10) configuré pour projeter une image réelle de la source lumineuse (2);
une première étendue géométrique du faisceau lumineux mesurée au niveau de la source lumineuse (2) étant inférieure à une deuxième étendue géométrique du faisceau lumineux mesurée au niveau d'une face de sortie (1021) de l'élément optique (10),
l'élément optique (10) comprenant :
- une première partie (101) située optiquement entre la source lumineuse (2) et le diffuseur (11), la première partie (101) étant apte à anamorphoser la source lumineuse (2) et à créer une première image réelle de la source lumineuse (2) à proximité ou sur le diffuseur (11);
- une deuxième partie (102) située optiquement entre le diffuseur (11) et la face de sortie (1021) de l'élément optique (10), la deuxième partie (102) étant une optique de projection des rayons lumineux diffusés par le diffuseur (11) et étant configurée pour créer une deuxième image réelle de la première image réelle créée au niveau du diffuseur (11)
dans lequel un premier axe optique (O1) associé à la première partie (101) de l'élément optique (10) est sécant à un deuxième axe optique (O2) associé à la deuxième partie (102) dudit élément optique (10), l' angle formé par le premier axe optique (O1) et le deuxième axe optique (O2) étant compris entre 70° et 110° ; le le diffuseur (11) étant configuré pour être au moins en partie réflectif.

2. Système optique (1) selon la revendication 1, dans lequel la première partie (101) de l'élément optique (10) est issue de matière avec le diffuseur (11), et/ou la deuxième partie (102) de l'élément optique (10) est issue de matière avec le diffuseur (11).

3. Système optique (1) selon l'une quelconque des revendications précédentes, dans lequel le diffuseur (11) est traversant, les rayons lumineux incidents (8b) sur une face d'incidence du diffuseur (11) étant diffusés au niveau d'une face opposée à la face d'incidence par rapport à la première partie (101) de l'élément optique (10).

4. Système optique (1) selon l'une quelconque des revendications précédentes, dans lequel le diffuseur (11) comprend une surface de diffusion rugueuse.

5. Système optique (1) selon la revendication précédente, dans lequel la surface de diffusion rugueuse du diffuseur (11) est grainée.

6. Système optique (1) selon l'une quelconque des revendications précédentes, dans lequel le diffuseur (11) est configuré pour diffracter les rayons lumineux incidents (8b).

7. Système optique (1) selon l'une quelconque des revendications précédentes, dans lequel le diffuseur (11) comprend une surface courbée.

8. Dispositif d'éclairage intérieur (3) pour plafonnier de véhicule automobile, le dispositif d'éclairage intérieur (3) comprenant :
- un système optique (1) selon l'une quelconque des revendications précédentes ;
- une source lumineuse (2) associée au système optique (1) et configurée pour générer des rayons lumineux que l'élément optique (10) du système optique (1) projette sur le diffuseur (11) dudit système optique (1), les rayons lumineux traversant la face de sortie (1021) dudit système optique (1) étant destinés à éclairer une partie d'un habitacle du véhicule automobile.

9. Dispositif d'éclairage intérieur (3) selon la revendication précédente, dans lequel la source lumineuse (2) est pixellisée et comprend une pluralité de diodes électroluminescentes organisées selon un réseau.

## Patentansprüche

1. Optisches System (1) für die Innenbeleuchtung eines Kraftfahrzeuginnenraums, wobei das optische System (1) umfasst:
- einen Diffusor (11), der konfiguriert ist, um einfallende Lichtstrahlen (8b) eines von einer Lichtquelle (2) erzeugten Lichtbündels zu streuen;
- ein optisches Element (10), das konfiguriert ist, um ein reelles Bild der Lichtquelle (2) zu projizieren;
wobei eine erste geometrische Ausdehnung des Lichtbündels, gemessen an der Lichtquelle (2), kleiner ist als eine zweite geometrische Ausdehnung des Lichtbündels, gemessen an einer Austrittsfläche (1021) des optischen Elements (10), wobei das optische Element (10) umfasst:
- einen ersten Teil (101), der optisch zwischen der Lichtquelle (2) und dem Diffusor (11) angeordnet ist, wobei der erste Teil (101) geeignet ist, die Lichtquelle (2) anamorphotisch abzubilden und ein erstes reelles Bild der Lichtquelle (2) in der Nähe oder auf dem Diffusor (11) zu erzeugen;
- einen zweiten Teil (102), der optisch zwischen dem Diffusor (11) und der Austrittsfläche (1021) des optischen Elements (10) angeordnet ist, wobei der zweite Teil (102) eine Projektionsoptik für die vom Diffusor (11) gestreuten Lichtstrahlen ist und konfiguriert ist, um ein zweites reelles Bild des ersten reellen Bildes zu erzeugen, das auf der Ebene des Diffusors (11) erzeugt wird, wobei eine erste optische Achse (01), die dem ersten Teil (101) des optischen Elements (10) zugeordnet ist, eine zweite optische Achse (02) schneidet, die dem zweiten Teil (102) des optischen Elements (10) zugeordnet ist, wobei der Winkel, der von der ersten optischen Achse (01) und der zweiten optischen Achse (02) gebildet wird, zwischen 70° und 110° liegt;
wobei der Diffusor (11) konfiguriert ist, um zumindest teilweise reflektierend zu sein.

2. Optisches System (1) nach Anspruch 1, wobei der erste Teil (101) des optischen Elements (10) aus Material mit dem Diffusor (11) hergestellt ist und/oder der zweite Teil (102) des optischen Elements (10) aus Material mit dem Diffusor (11) hergestellt ist.

3. Optisches System (1) nach einem der vorhergehenden Ansprüche, wobei der Diffusor (11) durchlässig ist, wobei die auf eine Eintrittsfläche des Diffusors (11) einfallenden Lichtstrahlen (8b) auf einer der Eintrittsfläche gegenüberliegenden Fläche in Bezug auf den ersten Teil (101) des optischen Elements (10) gestreut werden.

4. Optisches System (1) nach einem der vorhergehenden Ansprüche, wobei der Diffusor (11) eine raue Streufläche umfasst.

5. Optisches System (1) nach dem vorhergehenden Anspruch, wobei die raue Streufläche des Diffusors (11) gekörnt ist.

6. Optisches System (1) nach einem der vorhergehenden Ansprüche, wobei der Diffusor (11) konfiguriert ist, um die einfallenden Lichtstrahlen (8b) zu beugen.

7. Optisches System (1) nach einem der vorhergehenden Ansprüche, wobei der Diffusor (11) eine gekrümmte Oberfläche umfasst.

8. Innenbeleuchtungsvorrichtung (3) für eine Kraftfahrzeugdeckenleuchte, wobei die Innenbeleuchtungsvorrichtung (3) umfasst:
- ein optisches System (1) nach einem der vorhergehenden Ansprüche;
- eine Lichtquelle (2), die dem optischen System (1) zugeordnet ist und konfiguriert ist, um Lichtstrahlen zu erzeugen, die das optische Element (10) des optischen Systems (1) auf den Diffusor (11) des optischen Systems (1) projiziert, wobei die Lichtstrahlen, die durch die Austrittsfläche (1021) des optischen Systems (1) hindurchtreten, dazu bestimmt sind, einen Teil eines Innenraums des Kraftfahrzeugs zu beleuchten.

9. Innenbeleuchtungsvorrichtung (3) nach dem vorhergehenden Anspruch, wobei die Lichtquelle (2) pixeliert ist und eine Vielzahl von Leuchtdioden umfasst, die in einem Netzwerk angeordnet sind.

## Claims

1. Optical system (1) for interior lighting of a motor vehicle cabin, the optical system (1) comprising:
- a diffuser (11) configured to diffuse incident light rays (8b) of a light beam generated by a light source (2);
- an optical element (10) configured to project a real image of the light source (2);
a first geometric extent of the light beam measured at the light source (2) being less than a second geometric extent of the light beam measured at an exit face (1021) of the optical element (10), the optical element (10) comprising:
- a first part (101) optically located between the light source (2) and the diffuser (11), the first part (101) being able to anamorphose the light source (2) and create a first real image of the light source (2) near or on the diffuser (11);
- a second part (102) optically located between the diffuser (11) and the exit face (1021) of the optical element (10), the second part (102) being an optical projection of the light rays diffused by the diffuser (11) and being configured to create a second real image of the first real image created at the diffuser (11) wherein a first optical axis (01) associated with the first part (101) of the optical element (10) intersects a second optical axis (02) associated with the second part (102) of said optical element (10), the angle formed by the first optical axis (01) and the second optical axis (02) being between 70° and 110°;
the diffuser (11) being configured to be at least partially reflective.

2. Optical system (1) according to claim 1, wherein the first part (101) of the optical element (10) is formed of the same material as the diffuser (11), and/or the second part (102) of the optical element (10) is formed of the same material as the diffuser (11).

3. Optical system (1) according to any one of the preceding claims, wherein the diffuser (11) is transmissive, the incident light rays (8b) on an incident face of the diffuser (11) being diffused at a face opposite to the incident face with respect to the first part (101) of the optical element (10).

4. Optical system (1) according to any one of the preceding claims, wherein the diffuser (11) comprises a rough diffusion surface.

5. Optical system (1) according to the preceding claim, wherein the rough diffusion surface of the diffuser (11) is grained.

6. Optical system (1) according to any one of the preceding claims, wherein the diffuser (11) is configured to diffract the incident light rays (8b).

7. Optical system (1) according to any one of the preceding claims, wherein the diffuser (11) comprises a curved surface.

8. Interior lighting device (3) for a motor vehicle ceiling light, the interior lighting device (3) comprising:
- an optical system (1) according to any one of the preceding claims;
- a light source (2) associated with the optical system (1) and configured to generate light rays that the optical element (10) of the optical system (1) projects onto the diffuser (11) of said optical system (1), the light rays passing through the exit face (1021) of said optical system (1) being intended to illuminate a part of a cabin of the motor vehicle.

9. Interior lighting device (3) according to the preceding claim, wherein the light source (2) is pixelated and comprises a plurality of light-emitting diodes organized in an array.
